# EUROPÄISCHE PATENTSCHRIFT

(11) **EP 1 291 106 B1**
(45) Veröffentlichungstag und Bekanntmachung des Hinweises auf die Patenterteilung: **02.12.2009**
(21) Anmeldenummer: 02018746.4
(22) Anmeldetag: 22.08.2002
(51) Int. Cl.: B23C 5/00, B23C 5/22, B24B 13/04, B24B 13/01

(54) **Verfahren und Vorrichtung zur Flächenbearbeitung von Werkstücken aus nicht-sprödharten Materialien in der Optikfertigung sowie Werkzeug dafür**
Method and apparatus for the surface machining of work pieces made of non-brittle material in the optics fabrication, and tool therefor
Méthode et appareil pour le machinage de surface de pièces en matériaux non fragiles dans la fabrication d'optiques, et outil associé

(30) Priorität: 06.09.2001 DE 10143848
(43) Veröffentlichungstag der Anmeldung: 12.03.2003
(73) Patentinhaber: Satisloh GmbH, 35578 Wetzlar (DE)
(72) Erfinder: Diehl, Joachim, 35398 Giessen-Allendorf (DE); Lautz, Ronald, 35625 Hüttenberg (DE); Tross, Karl-Heinz, 35630 Ehringshausen (DE)
(74) Vertreter: Oppermann, Mark

(56) Entgegenhaltungen:
- EP-A- 0 849 038
- WO-A-97/13603
- WO-A-99/33611
- DE-A1- 3 017 880
- DE-A1- 19 525 310
- DE-C1- 19 529 786
- US-A- 5 485 771

## Beschreibung

Die vorliegende Erfindung bezieht sich auf ein Verfahren und eine Vorrichtung zur Flächenbearbeitung von Werkstücken aus nicht-sprödharten Materialien in der Optikfertigung gemäß den Oberbegriffen der Patentansprüche 1 bzw. 13 sowie auf ein Werkzeug dafür. Insbesondere bezieht sich die Erfindung auf die industrielle Bearbeitung von Rezeptflächen an Brillenlinsen aus Kunststoffen, wie Polycarbonat, CR39 und sogenannte "High Index" Materialien.

Üblicherweise liegt bei dieser Bearbeitung ein aus Kunststoff spritzgegossener Brillenlinsenrohling, auch "Blank" genannt, vor, der eine standardisierte endbearbeitete konvexe Außenfläche mit z.B. sphärischer oder progressiver Form aufweist. Die in der Regel konkaven Innen- bzw. Rezeptflächen erhalten mittels spanender Bearbeitung eine sphärische, asphärische, torische, atorische, progressive oder Freiformgeometrie, je nach der gewünschten optischen Wirkung. Der typische konventionelle Ablauf bei der Innenflächenbearbeitung sieht nach dem Aufblocken des Brillenlinsenrohlings mit seiner Außenfläche auf einem Blockstück einen Fräs- oder Drehbearbeitungsprozeß zur Herstellung der optisch aktiven Form vor, gefolgt von einem Feinschleif- oder Polierprozeß zur Erzielung der notwendigen Oberflächengüte.

Ein Verfahren und eine Vorrichtung zur Flächenbearbeitung von Werkstücken aus nicht-sprödharten Materialien in der Optikfertigung gemäß den Oberbegriffen der Ansprüche 1 bzw. 13 sind aus der DE 19529786 C1 bekannt.

Aus diesem gattungsbildenden Stand der Technik der Anmelderin ist in diesem Zusammenhang ein Verfahren zur Erzeugung einer Oberfläche an einem Brillenlinsenrohling bekannt geworden, das sowohl für sprödharte Materialien als auch für Kunststoffe geeignet ist. Hierbei wird ein scheibenförmiges, rotationssymmetrisches Schleif- bzw. Fräswerkzeug verhältnismäßig großen Durchmessers verwendet, mit dessen Hilfe in mindestens zwei Arbeitsgängen, einem Einstech-Arbeitsgang für den hauptsächlichen Materialabtrag und einem formgebenden Arbeitsgang mit weiterer Materialabtragung entlang eines spiralförmigen Weges, das zu entfernende Rohlingmaterial mit hoher Schleif- bzw. Fräsleistung zerspant wird. Dabei resultiert aus dem letzten Arbeitsgang eine spiralförmig von außen nach innen verlaufende Bearbeitungsbahn mit geringer kinematischer Rauhigkeit bei relativ großem Spiralabstand. Die so erzeugte Oberfläche bedarf sodann nur geringer Feinschleif- und Poliernachbearbeitung. Wahlweise kann in dieses Verfahren sogar sowohl ein an die Brillengestellform anpassender Randbearbeitungsvorgang als auch ein den Brillenglasrand facettierender Arbeitsgang integriert sein.

Obgleich mit diesem vorbekannten Verfahren eine sehr gute Zerspanungsleistung und demgemäß kurze, industriellen Anforderungen genügende Bearbeitungszeiten erzielt werden können, wäre es für bestimmte Anwendungsfälle wünschenswert, eine noch höhere Oberflächenqualität vor der Feinschleif- bzw. Poliernachbearbeitung zu erzielen, insbesondere bei komplexen optischen Flächen, wie asphärischen, atorischen oder progressiven bzw. Freiformflächen. Bei diesen Flächenformen können nämlich keine Feinschleifprozesse nachgeschaltet werden, die formgebundene Werkzeuge verwenden. Vielmehr müssen derartige Flächen in der Regel unter Verwendung flexibler Polierwerkzeuge poliert werden, wobei dies um so besser und effizienter geschehen kann, je weniger Polierabtrag erforderlich ist. Im Idealfall könnte bei Flächen mit sehr hoher Oberflächenqualität ein nachgeschalteter Feinschleif- oder Polierprozeß eventuell sogar gänzlich entfallen, wobei dann eine dem Polieren angenäherte optische Qualität durch ein nachgeschaltetes Beschichtungsverfahren, auch "Cut & Coat" Verfahren genannt, erhalten werden könnte (siehe z.B. DE 30 17 880 A1).

Des weiteren sind -- wie eingangs bereits erwähnt -- auch Drehbearbeitungsverfahren bekannt, die der Erzeugung von Rezeptflächen an Brillenlinsenrohlingen aus Kunststoff dienen. In diesem Zusammenhang sei beispielsweise auf die Druckschriften US-PS 5,485,771, WO 97/13603, EP 0 849 038 A2 und WO 99/33611 verwiesen. Die Erzielung qualitativ hochwertiger Oberflächen setzt bei diesen Drehbearbeitungsverfahren ausreichende Schnittgeschwindigkeiten voraus. Werden z.B. nicht-rotationssymmetrische Flächen mit hohen Zylinderwirkungen gedreht, muß der Drehmeißel zur Erzielung hoher Oberflächenqualitäten mit enorm hohen Beschleunigungen von zum Teil mehr als 10 g über einen Hub von bis zu 15 mm zweimal pro Werkstückumdrehung mit hoher Stellgenauigkeit bewegt werden. Hierfür werden im einschlägigen Stand der Technik sogenannte "Fast-Tool-Servos" eingesetzt, bei denen der Drehmeißel direkt mittels eines Linearmotors bewegt wird. Um die hierbei resultierende Schwingung des Drehsupports zu kompensieren, ist ein im Gewicht dem Drehsupport entsprechender Kompensationsschlitten vorgesehen, der im Gegentakt zum Drehsupport schwingt. Die hierbei bewegten Teile müssen extrem leicht gebaut werden, zudem stellen die hohen Beschleunigungen sehr hohe technische Anforderungen an die Linearmotoren, die Meßsysteme und nicht zuletzt an die Steuerung. Darüber hinaus ist eine Zerspanung von Rohlingmaterial mit mehr als 5 mm Dicke selbst unter Verwendung von Profil-Drehmeißeln nicht möglich. Brillenlinsenrohlinge sind jedoch oft bis zu 15 mm dicker als die fertige Brillenlinse, weshalb mehrere Drehbearbeitungsvorgänge notwendig sind. Alles in allem werden bei den bekannten Drehbearbeitungsverfahren zum einen relativ aufwendige Vorrichtungen eingesetzt; zum anderen sind hier die Bearbeitungszeiten bei großen zu zerspanenden Werkstoffvolumina noch verbesserungsbedürftig.

Schließlich offenbart die DE 195 25 310 A1, die als nächstliegenden Stand der Technik bezüglich des Gegenstandes des Anspruchs 7 angesehen wird, ein Drehfräswerkzeug mit einem Grundkörper, an dem eine Mehrzahl von Fräserschneiden vorgesehen ist, die bei einer Drehung des Werkzeugs einen Flugkreis definieren, wobei am Grundkörper auch mehrere gleichmäßig am Umfang verteilte Drehschneiden angeordnet sind, die gegenüber dem Flugkreis der Fräserschneiden um einen vorbestimmten Betrag nach radial innen versetzt sind. Dieser Stand der Technik betrifft jedoch nicht die Flächenbearbeitung von Werkstücken aus nicht-sprödharten Materialien in der Optikfertigung. Außerdem sind bei diesem Stand der Technik die Drehschneiden, zu deren Geometrie keine weiteren Angaben gemacht werden, lediglich zur Verwendung in einer arretierten Position vorgesehen.

Ausgehend vom Stand der Technik nach der DE 195 29 786 C1 liegt der Erfindung die Aufgabe zugrunde, ein effizientes Verfahren anzugeben und eine einfach aufgebaute Vorrichtung zu schaffen, mittels dem bzw. der bei hoher Zerspanungsleistung eine gegenüber dem gattungsbildenden Stand der Technik höhere Oberflächenqualität erzielbar ist. Die Erfindungsaufgabe umfaßt auch die Bereitstellung eines geeignet ausgebildeten Werkzeugs.

Diese Aufgabe wird durch die in den Patentansprüchen 1, 7 bzw. 13 angegebenen Merkmale gelöst. Vorteilhafte bzw. zweckmäßige Weiterbildungen der Erfindung sind Gegenstand der Patentansprüche 2 bis 6, 8 bis 12 und 14.

Nach einem im Patentanspruch 1 angegebenen Grundgedanken der Erfindung schließt sich bei einem Verfahren zur Flächenbearbeitung von Werkstücken aus nicht-sprödharten Materialien in der Optikfertigung, wie Brillenlinsen aus Kunststoff, bei welchem das im Drehwinkel geregelt um eine Werkstück-Drehachse B rotierende Werkstück einem Fräsbearbeitungsvorgang durch ein Werkzeug ausgesetzt wird, das um eine mit der Werkstück-Drehachse B einen vorbestimmten Winkel einschließende Werkzeug-Drehachse C rotiert, wobei das Werkstück und das Werkzeug in wenigstens einer von zwei rechtwinklig verlaufenden Achsrichtungen X, Y derart lagegeregelt relativ zueinander bewegt werden, daß das Werkzeug während eines Einstech-Arbeitsgangs mindestens im Bereich des Außenrands des Werkstücks eine ringmuldenförmige Ausnehmung erzeugt, bevor das Werkzeug in einem formgebenden Arbeitsgang entlang eines spiralförmigen Weges über das Werkstück weiteres Material abträgt, an diesen Fräsbearbeitungsvorgang ein Drehbearbeitungsvorgang an, bei dem eine am Werkzeug vorgesehene Drehschneide durch eine lagegeregelte Relativbewegung von Werkstück und Werkzeug in wenigstens einer der zwei Achsrichtungen X, Y und eine im Drehwinkel geregelte Schwenkbewegung des Werkzeugs um die Werkzeug-Drehachse C tangential an die zu bearbeitende Fläche des im Drehwinkel geregelt um die Werkstück-Drehachse B gedrehten Werkstücks angelegt und im Drehbearbeitungseingriff entlang eines spiralförmigen Weges über das Werkstück geführt wird.

Weiterhin sieht die Erfindung nach der Lehre des Patentanspruchs 7 insbesondere für die Durchführung des obigen Verfahrens ein Werkzeug zur Flächenbearbeitung von Werkstücken aus nicht-sprödharten Materialien in der Optikfertigung, wie Brillenlinsen aus Kunststoff, vor, das einen Grundkörper aufweist, an dem eine Mehrzahl von Fräserschneiden vorgesehen ist, die bei einer Drehung des Werkzeugs um eine Werkzeug-Drehachse C in einer Ebene senkrecht zur Werkzeug-Drehachse C einen Flugkreis definieren, wobei am Grundkörper auch mindestens eine Drehschneide vorgesehen ist, die gegenüber dem Flugkreis der Fräserschneiden um einen vorbestimmten Betrag nach radial innen versetzt angeordnet ist, und wobei die Drehschneide eine konstante Krümmung mit einem Radius hat, der im wesentlichen dem Abstand der Drehschneide zur Werkzeug-Drehachse C entspricht, oder Teilbereiche von verschiedener, jeweils konstanter Krümmung aufweist, von denen ein Teilbereich eine konstante Krümmung mit einem Radius hat, der im wesentlichen dem Abstand der Drehschneide zur Werkzeug-Drehachse C entspricht.

Schließlich ist erfindungsgemäß bei der im Oberbegriff des Patentanspruchs 13 angegebenen, insbesondere für die Durchführung des obigen Verfahrens unter Verwendung insbesondere des obigen Werkzeugs geeigneten Vorrichtung zur Flächenbearbeitung von Werkstücken aus nicht-sprödharten Materialien in der Optikfertigung, wie Brillenlinsen aus Kunststoff, die eine Werkstückspindel hat, mittels der das Werkstück im Drehwinkel geregelt um eine Werkstück-Drehachse B drehend antreibbar ist, und eine Werkzeugspindel aufweist, mittels der das Werkzeug um eine Werkzeug-Drehachse C drehend antreibbar ist, welche mit der Werkstück-Drehachse B einen vorbestimmten Winkel einschließt, wobei Werkstück- und Werkzeugspindel lagegeregelt in zwei rechtwinklig verlaufenden Achsrichtungen X, Y relativ zueinander bewegbar sind, für eine Drehbearbeitung der zu bearbeitenden Fläche des Werkstücks das Werkzeug mittels der Werkzeugspindel im Drehwinkel geregelt um die Werkzeug-Drehachse C verschwenkbar, so daß eine am Werkzeug vorgesehene Drehschneide in Abhängigkeit von der Drehwinkelstellung des Werkstücks mit der zu bearbeitenden Fläche des Werkstücks in einen definierten Drehbearbeitungseingriff bringbar ist.

Im Kern stellt die Erfindung verfahrensseitig also darauf ab, den bewährten Fräsbearbeitungsvorgang, bei dem große Materialmengen des Werkstücks, z.B. des Brillenlinsenrohlings, in sehr kurzer Zeit zerspant werden können, mit einem sich daran anschließenden, speziellen (Fein)Drehbearbeitungsvorgang zu kombinieren, welcher der Erzielung einer höheren Oberflächenqualität dient. Hierbei werden durch den Drehbearbeitungsvorgang ggf. nachfolgende Bearbeitungsschritte störende Fräsriefen beseitigt, die während des Fräsbearbeitungsvorgangs infolge des diskontinuierlichen Bearbeitungseingriffs der einzelnen Fräserschneiden bzw. des unterbrochenen Schnitts durch die Fräserschneiden auf der bearbeiteten Fläche des Werkstücks in Richtung der Mittelachse im wesentlichen senkrecht zur Spiralbahn erzeugt werden. Werkzeugseitig wird ein Werkzeug vorgeschlagen, das quasi eine Kombination von Fräser und Drehschneiden- bzw. -meißelrevolver darstellt, wobei die wenigstens eine Drehschneide des Werkzeugs in radialer Richtung gesehen hinter dem Flugkreis der Fräserschneiden zurücksteht, so daß die Drehschneide bei einer kontinuierlichen Drehung des Werkzeugs während eines Fräsbearbeitungsvorgangs nicht mit dem Werkstück in Bearbeitungseingriff gelangen kann. Für einen sich an den Fräsbearbeitungsvorgang anschließenden Drehbearbeitungsvorgang ist das Werkzeug zunächst zu stoppen und sodann mit seiner Drehschneide bezüglich der zu bearbeitenden Werkstückfläche winkelzupositionieren. Die Drehschneide kann somit auch unabhängig von den Fräserschneiden hinsichtlich der Schneidengeometrie (Schneidenradius, Spanwinkel) sowie dem Schneidenmaterial gestaltet und demgemäß optimal an das Werkstückmaterial angepaßt werden. Hierbei hat die Drehschneide eine konstante Krümmung mit einem Radius, der im wesentlichen dem Abstand der Drehschneide zur Werkzeug-Drehachse C entspricht, oder weist Teilbereiche von verschiedener, jeweils konstanter Krümmung auf, von denen ein Teilbereich eine konstante Krümmung mit einem Radius hat, der im wesentlichen dem Abstand der Drehschneide zur Werkzeug-Drehachse C entspricht. Durch diese Ausgestaltung der Drehschneide werden auf vorteilhaft einfache Weise Formfehler an der bearbeiteten Fläche des Werkstücks zuverlässig vermieden, die ggf. durch eine falsche Winkellage der Drehschneide hervorgerufen werden könnten. Mit anderen Worten gesagt sind somit Fehler bei der Schwenkpositionierung der Drehschneide für die Drehbearbeitung in vorteilhafter Weise vernachlässigbar. Vorrichtungsseitig wird schließlich die bekannte, in den zwei Linearachsen X und Y lagegeregelte sowie in der Werkstück-Drehachse B drehwinkelgeregelte Vorrichtung in einfacher Weise um eine weitere (CNC-)geregelte Achse ergänzt, nämlich die drehwinkelgeregelte Werkzeug-Drehachse C. Dies gestattet eine Schwenkpositionierung des Werkzeugs bezüglich der zu bearbeitenden Fläche des Werkstücks, so daß die Drehschneide des Werkzeugs stets in einen definierten Drehbearbeitungseingriff mit der zu bearbeitenden Fläche des Werkstücks gebracht werden kann, beispielsweise derart, daß dabei eine an die Drehschneide angelegte Tangente stets mit einer an die zu bearbeitende Fläche angelegten Tangente zusammenfällt. In Summe kann die zu bearbeitende Fläche des Werkstücks mit nur einem Werkzeug, welches neben Fräserschneiden auch wenigstens eine Drehschneide aufweist, in nur einer Vorrichtung und einer Aufspannung des Werkstücks sowohl einem Fräsbearbeitungsvorgang mit einem verhältnismäßig großen Zerspanungsvolumen als auch einem (Fein) Drehbearbeitungsvorgang unterworfen werden, so daß Flächen von beliebiger Geometrie mit hoher Qualität, d.h. makrogeometrisch gesehen verbesserter Geometriegenauigkeit und mikrogeometrisch gesehen geringstmöglicher Randzonenschädigung schnell und zuverlässig bearbeitet werden können.

Gemäß dem Patentanspruch 2 ist vorgesehen, daß bei dem Drehbearbeitungsvorgang wenigstens ein Teilbereich einer Drehschneide des Werkzeugs mit der zu bearbeitenden Fläche des Werkstücks in Drehbearbeitungseingriff gebracht wird, wobei zumindest der in Drehbearbeitungseingriff gebrachte Teilbereich der Drehschneide gleich oder nur geringfügig stärker gekrümmt ist als die zu bearbeitende Fläche. Da erfindungsgemäß die Drehschneide auch definiert verschwenkt und somit tangential an die zu bearbeitende Fläche des Werkstücks angelegt werden kann, kann hier in kostengünstiger Weise selbst eine relativ schmale Drehschneide eine relativ flache Krümmung bzw. einen großen Radius aufweisen, anders als die im Stand der Technik verwendeten Drehschneiden, die eine sehr starke Krümmung bzw. einen sehr kleinen Radius aufweisen müssen, damit sie bei lediglich linearer Zustellung eine definierte Geometrie am Werkstück, insbesondere Brillenlinsen mit stark gekrümmten Rezeptflächen erzeugen können. Die somit erst durch die Erfindung mit vertretbarem Aufwand mögliche Verwendung von Drehschneiden mit im Verhältnis flachen Krümmungen hat darüber hinaus den Vorteil, daß bei der Drehbearbeitung Spiralbahnen mit relativ großen Spiralabständen ohne hohe Dynamik der Zustellbewegungen gefahren werden können, was nicht nur die Drehbearbeitung gegenüber herkömmlichen Drehbearbeitungsprozeßen bei wenigstens gleicher Qualität der erzeugten Oberflächen beschleunigt sondern auch geringere Anforderungen an die verwendete Vorrichtung stellt.

Auch das im Patentanspruch 3 angegebene Vorgehen bei dem Drehbearbeitungsvorgang baut in vorteilhafter Weise darauf auf, daß die Drehschneide nach der Erfindung relativ zu der zu bearbeitenden Fläche des Werkstücks definiert verschwenkt werden kann. Demgemäß wird bei dem Drehbearbeitungsvorgang wenigstens ein Teilbereich einer Drehschneide des Werkzeugs mit der zu bearbeitenden Fläche des Werkstücks in Drehbearbeitungseingriff gebracht, wobei das Werkzeug für weitere Drehbearbeitungsvorgänge in Abhängigkeit vom Verschleiß der Drehschneide um die Werkzeug-Drehachse im Drehwinkel geregelt verschwenkt wird, um einen anderen Teilbereich dieser Drehschneide oder wenigstens einen Teilbereich einer anderen Drehschneide mit der zu bearbeitenden Fläche des Werkstücks in Drehbearbeitungseingriff zu bringen. Der Drehschneidenverschleiß könnte hierbei beispielsweise über eine Messung der erzeugten Fläche und einen sich anschließenden Vergleich zwischen dem Soll- und dem Istzustand des Bearbeitungsergebnisses ermittelt werden.

Nach der Lehre des Patentanspruchs 4 wird für den Drehbearbeitungsvorgang am Werkzeug eine Drehschneide eingesetzt, die, wie auch im Patentanspruch 7 bzw. 9 angegeben, unterschiedlich gekrümmte Teilbereiche aufweist, wobei das Werkzeug in Abhängigkeit von dem gewünschten Zerspanungsvolumen und der gewünschten Oberflächenqualität der bearbeiteten Fläche des Werkstücks derart um die Werkzeug-Drehachse C im Drehwinkel geregelt verschwenkt wird, daß für ein im Verhältnis großes Zerspanungsvolumen ein stärker gekrümmter Teilbereich der Drehschneide mit der zu bearbeitenden Fläche des Werkstücks in Drehbearbeitungseingriff gebracht wird, während für eine im Verhältnis hohe Oberflächenqualität ein schwächer gekrümmter Teilbereich der Drehschneide mit der zu bearbeitenden Fläche des Werkstücks in Drehbearbeitungseingriff gebracht wird. So kann den jeweiligen Erfordernissen entsprechend die Drehbearbeitung unter in vorteilhafter Weise vorwählbaren Gesichtspunkten erfolgen, ohne daß dazu das Werkzeug zu wechseln wäre. Insbesondere in herstellungstechnischer Hinsicht zweckmäßig ist hierbei die im Patentanspruch 9 angegebene Ausbildung des Werkzeugs, gemäß der die Drehschneide Teilbereiche von verschiedener, jeweils konstanter Krümmung aufweist, wobei die Krümmung in Drehrichtung des Werkzeugs gesehen ausgehend von einem Ende der Drehschneide zum anderen Ende der Drehschneide von Teilbereich zu Teilbereich kontinuierlich abnimmt.

Der Patentanspruch 5 sieht vor, daß bei dem Drehbearbeitungsvorgang eine mit der zu bearbeitenden Fläche im Drehbearbeitungseingriff befindliche Drehschneide entlang eines spiralförmigen Weges über das Werkstück geführt wird, der in regelungstechnisch einfacher Weise eine Form ähnlich einer archimedischen Spirale aufweist. Dies ermöglicht in vorteilhafter Weise auch im wesentlichen konstante Schnittgeschwindigkeiten während des Drehbearbeitungsvorgangs, ohne daß hierfür ein hoher regelungstechnischer Aufwand betrieben werden müßte. Alternativ dazu ist es aber auch denkbar, während des Drehbearbeitungsvorgangs Spiralbahnen zu fahren, die eine in einer der Achsrichtungen X, Y gestauchte Form aufweisen. Um die Dynamik der Zustellbewegungen abzuschwächen, würde sich hier eine Stauchung der Form der gefahrenen Spiralbahn in der Achsrichtung anbieten, in der während des Drehbearbeitungsvorgangs die beteiligten Bauelemente der Vorrichtung mit oder gegen die Schwerkraft bewegt werden müssen.

Ein weiterer wesentlicher Vorteil des erfindungsgemäßen, aus einem bestimmten Fräsbearbeitungsvorgang und einem sich daran anschließenden speziellen Drehbearbeitungsvorgang kombinierten Verfahrens ist darin zu sehen, daß das von reinen Drehverfahren her bekannte Problem der Entstehung eines Fließspanes, und damit der Spanabfuhr nicht besteht, welches insbesondere bei zähen Kunststoffen, wie Polycarbonat, nicht zu unterschätzen ist. Vor allem bei mannloser, vollautomatischer Bearbeitung kann es durch einen Fließspan zum Spänestau und daraus resultierenden Maschinenausfällen kommen. Bei Brillenlinsen-Drehmaschinen wird aus diesem Grund oftmals eine Späneabsaugung mit integriertem Häcksler eingesetzt. Derartige Einrichtungen erübrigen sich bei dem erfindungsgemäßen Bearbeitungsverfahren in vorteilhafter Weise. Während des anfänglichen Fräsbearbeitungsvorgangs entstehen kurze Späne, deren Abfuhr keinerlei Probleme bereitet; beim nachfolgenden Drehbearbeitungsvorgang entsteht nicht zuletzt aufgrund der wie oben beschrieben möglichen, nur schwach gekrümmten Drehschneide ein sehr dünner, relativ breiter Fließspan, der infolge der mit abgetragenen Fräsriefen, die quasi Sollbruchstellen des Spanes darstellen, örtlich geschwächt ist und deshalb relativ leicht zerbricht. Wie Versuche der Anmelderin gezeigt haben, läßt sich der beim Drehbearbeitungsvorgang entstehende Fließspan besonders leicht zerstückeln, wenn, wie im Patentanspruch 6 angegeben, während des Drehbearbeitungsvorgangs ein Hochdruck-Kühlmittelstrahl auf die Bearbeitungseingriffsstelle zwischen Werkzeug und Werkstück gerichtet wird.

Nach der Lehre des Patentanspruchs 8 sind am Grundkörper mehrere Drehschneiden vorgesehen, die vorzugsweise gleichmäßig am Umfang des Grundkörpers verteilt sind. Somit können in vorteilhafter Weise z.B. untereinander verschiedene Drehschneiden, die hinsichtlich ihrer Geometrie und/oder des Drehschneidenmaterials individuell an die zu erzeugende Werkstückgeometrie und/oder an das zu zerspanende Material des Werkstücks angepaßt sind, an einem Werkzeug eingesetzt werden, so daß selbst für die Bearbeitung von in Geometrie bzw. Werkstoff verschiedenen Werkstücken das Werkzeug nicht gewechselt werden muß. Eine gleichmäßige Verteilung der Drehschneiden am Umfang des Grundkörpers hat den Vorteil, daß infolge der Drehschneiden keine Unwuchten entstehen, die bei einem Einsatz des Werkzeugs als Fräser der Oberflächenqualität der erzeugten Fläche abträglich sein könnten.

Der Patentanspruch 10 sieht vor, daß die Drehschneide zwei Teilbereiche hat, von denen der eine Teilbereich eine konstante Krümmung mit einem Radius aufweist, der im wesentlichen dem Abstand der Drehschneide zur Werkzeug-Drehachse C entspricht, wodurch sich bei der Drehbearbeitung die obigen Vorteile ergeben, während der andere Teilbereich eine konstante Krümmung mit einem Radius aufweist, der deutlich kleiner ist als der Radius des erstgenannten Teilbereichs. Bei dieser Ausgestaltung der Drehschneide kann der einen kleineren Radius aufweisende Teilbereich als Einlaufbereich vorteilhaft dem Grobzerspanen der nach dem Fräsbearbeitungsvorgang noch vorhandenen kinematischen Rauhigkeit der bearbeiteten Fläche des Werkstücks dienen, während der einen größeren Radius aufweisende Teilbereich während des Drehbearbeitungsvorgangs als geometriebestimmender Bereich zum Schlichten eingesetzt werden kann.

Zweckmäßig ist die Drehschneide durch ein Schneidplättchen an einem Drehmeißel ausgebildet, der lösbar am Grundkörper befestigt ist, wie im Patentanspruch 11 angegeben, so daß der Drehmeißel zum Ersatz durch einen anderen Drehmeißel oder zum Nacharbeiten austauschbar ist.

Nach der Lehre des Patentanspruchs 12 ist in einer vorteilhaft einfachen Ausgestaltung des Werkzeugs der Grundkörper mit einem Sackloch zur Aufnahme eines im Querschnitt kreisförmigen Schafts des Drehmeißels versehen, wobei der Schaft eine schräge Aussparung aufweist, an dem eine in eine Gewindebohrung des Grundkörpers einschraubbare Schraube anliegt, um den Drehmeißel lösbar am Grundkörper zu befestigen und auf Anschlag gegen den Boden des Sacklochs zu halten. Die Längenabstimmung des Drehmeißels kann hier in einfacher Weise in der Bearbeitungsvorrichtung erfolgen, nachdem der Drehmeißel entsprechend dem Werkstück positioniert wurde. Dabei wird z.B. eine Brillenlinse gedreht und sodann deren Mittendicke gemessen. Falls die korrekte Mittendicke nicht erreicht wird, kann das Maß, um das der Drehmeißel bei der Drehbearbeitung zu lang oder zu kurz war, bei Folgebearbeitungen durch entsprechende Regelung der Achsen der Vorrichtung CNC-technisch kompensiert werden.

Schließlich sind gemäß dem Patentanspruch 14 sowohl die Werkstückspindel als auch die Werkzeugspindel horizontal ausgerichtet. Diese Anordnung wird bevorzugt, weil dadurch die Beschickung der Vorrichtung und der Spanabtransport während der Bearbeitung vereinfacht werden. Denkbar ist jedoch auch eine massendynamisch optimierte Ausrichtung der Werkstück- und Werkzeugspindeln derart, daß bei der Bearbeitung keine der Spindeln mit oder gegen die Schwerkraft bewegt werden muß.

Im folgenden wird die Erfindung anhand bevorzugter Ausführungsbeispiele unter Bezugnahme auf die beigefügten, zum Teil schematischen Zeichnungen näher erläutert. Darin zeigen:
Fig. 1 eine erfindungsgemäße Vorrichtung zur Flächenbearbeitung von Brillenlinsen aus Kunststoff in einer schematischen, teilweise geschnittenen und abgebrochenen Vorderansicht, in der Werkstück und Werkzeug sich in einem Fräsbearbeitungseingriff befinden und vier CNC-geregelte Achsen, nämlich eine Linearachse Y für das Werkstück, eine dazu rechtwinklig verlaufende Linearachse X für das Werkzeug, eine drehwinkelgeregelte Werkstück-Drehachse B und eine drehwinkelgeregelte Werkzeug-Drehachse C angedeutet sind;
Fig. 2 eine schematische, abgebrochene Seitenansicht der in Fig. 1 dargestellten Vorrichtung von rechts in Fig. 1;
Fig. 3 eine schematische, teilweise geschnittene und abgebrochene Draufsicht auf die in Fig. 1 dargestellte Vorrichtung von oben in Fig. 1;
Fig. 4 eine aufgebrochene Stirnansicht eines erfindungsgemäßen Werkzeugs zur Flächenbearbeitung von Brillenlinsen aus Kunststoff, welches neben einer Mehrzahl von gleichmäßig am Umfang verteilten Fräs-Schneidplättchen zwei symmetrisch angeordnete Drehmeißel aufweist;
Fig. 5 eine Schnittansicht des in Fig. 4 gezeigten Werkzeugs entsprechend der Schnittverlaufslinie V-V in Fig. 4, in der zur Vereinfachung der Darstellung lediglich eines der Fräs-Schneidplättchen gezeigt ist;
Fig. 6 eine vergrößerte Draufsicht auf die Drehschneide eines Drehmeißels des in den Fig. 4 und 5 gezeigten Werkzeugs entsprechend dem Detailausschnitt D in Fig. 4 in Richtung des Pfeils P in Fig. 5 gesehen;
Fig. 7 eine in der Darstellungsweise der Fig. 6 entsprechende, vergrößerte Draufsicht auf die Drehschneide eines Drehmeißels in einer alternativen Ausgestaltung; und
Fig. 8 bis 11 prinzipielle Darstellungen, die einen Drehbearbeitungsvorgang zur Bearbeitung einer torischen Fläche an einer geschnitten gezeigten Brillenlinse mittels einer erfindungsgemäßen Vorrichtung unter Verwendung eines erfindungsgemäßen Werkzeugs in einer Vorderansicht entsprechend der Darstellung in Fig. 1 illustrieren, wobei die Fig. 8 und 9 den Beginn und die Fig. 10 und 11 das Ende des Drehbearbeitungsvorgangs veranschaulichen, und wobei die Brillenlinse in den Fig. 9 und 11 gegenüber den Fig. 8 bzw. 10 um die Werkstück-Drehachse B um 90° weitergedreht ist.

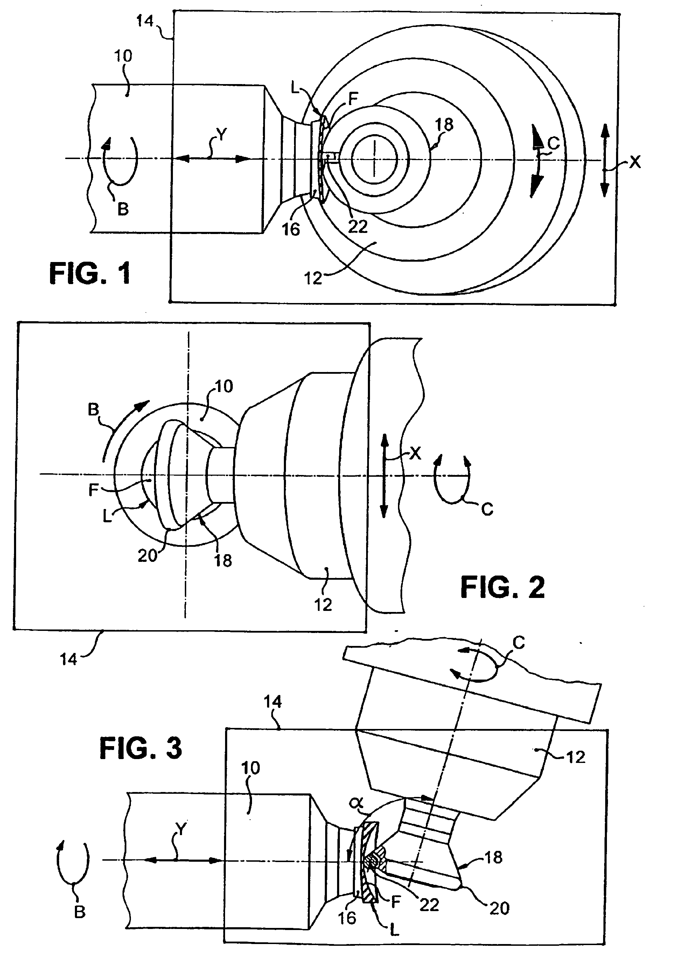

Von der Vorrichtung zur Flächenbearbeitung von Brillenlinsen L aus Kunststoff sind in den Fig. 1 bis 3 zur Vereinfachung nur die Werkstückspindel 10 und die Werkzeugspindel 12 dargestellt, die sich geeignet abgedichtet in einen durch einen rechteckigen Linienzug angedeuteten, zur Umgebung hin abschirmbaren Arbeitsraum 14 hinein erstrecken. An der Werkstückspindel 10 ist endseitig in an sich bekannter Weise die auf einem Blockstück 16 aufgeblockte Brillenlinse L für die Bearbeitung der Rezeptfläche F derart angebracht, daß sie gleichachsig mit der Werkstückspindel 10 drehen kann. Die Werkstückspindel 10 ist hierfür mittels eines nicht dargestellten Elektromotors in der Drehzahl und dem Drehwinkel CNC-geregelt um die Werkstück-Drehachse B drehend antreibbar. Ferner ist die Werkstückspindel 10 mittels eines ebenfalls nicht gezeigten Schlittens und zugeordneter Antriebs- und Steuerungselemente in der im dargestellten Ausführungsbeispiel horizontal verlaufenden linearen Achsrichtung Y CNC-lagegeregelt verstellbar, d.h. sie kann in den Fig. 1 und 3 nach rechts und nach links definiert verlagert werden.

Die im dargestellten Ausführungsbeispiel wie die Werkstückspindel 10 horizontal ausgerichtete Werkzeugspindel 12 schließt, wie die Fig. 3 zeigt, mit der Werkstückspindel 10 einen vorbestimmten bzw. durch die Maschinenkonstruktion festgelegten Winkel α ein, der hier 105° beträgt. An der Werkzeugspindel 12 ist endseitig in an sich bekannter Weise ein Werkzeug 18 befestigt, welches gleichachsig mit der Werkzeugspindel 12 drehen kann und -- wie nachfolgend noch näher beschrieben werden wird -- auf besondere Art und Weise ausgebildet ist, um sowohl einen Fräs- als auch einen Drehbearbeitungsvorgang durchzuführen. Hierfür ist die Werkzeugspindel 12 mittels eines nicht dargestellten Elektromotors in der Drehzahl und auch dem Drehwinkel CNC-geregelt um die Werkzeug-Drehachse C drehend bzw. verschwenkend antreibbar. Der Drehantrieb der Werkzeugspindel 12 ist dabei so ausgelegt, daß er zum einen während eines Fräsbearbeitungsvorgangs die zur Erzielung hoher Zerspanungsleistungen notwendigen Drehzahlen von bis zu 30.000 U/min ermöglicht, und zum anderen während eines Drehbearbeitungsvorgangs eine Positionierung des Werkzeugs 18 in eine genaue Winkellage bezüglich der zu bearbeitenden Rezeptfläche F der Brillenlinse L mit hoher Dynamik gestattet.

Weiterhin ist die Werkzeugspindel 12 mittels eines ebenfalls nicht gezeigten Schlittens und zugeordneter Antriebs- und Steuerungselemente in der im dargestellten Ausführungsbeispiel vertikal verlaufenden linearen Achsrichtung X CNC-lagegeregelt verstellbar, d.h. sie kann in den Fig. 1 und 2 definiert nach oben und nach unten bewegt werden. Im Ergebnis können mittels der beschriebenen Vorrichtung die Brillenlinse L und das Werkzeug 18 in den zwei rechtwinklig verlaufenden linearen Achsrichtungen Y bzw. X lagegeregelt sowie in der Werkstück-Drehachse B bzw. der Werkzeug-Drehachse C drehwinkelgeregelt relativ zueinander bewegt bzw. verschwenkt werden, um das Werkzeug 18 in einen definierten Bearbeitungseingriff mit der Brillenlinse L zu bringen und unter Beibehaltung des definierten Bearbeitungseingriffs relativ zur Brillenlinse L entlang einer vorgebbaren Bearbeitungsbahn bzw. eines vorgebbaren Weges zu führen, wie im folgenden noch näher erläutert werden wird.

Erwähnt sei in diesem Zusammenhang schließlich noch, daß an der Werkzeugspindel 12 auch eine hier nicht gezeigte Justagemöglichkeit vorgesehen ist, die es gestattet, die Werkzeugspindel 12 in einer linearen, zu den Achsrichtungen X und Y senkrechten Richtung, d.h. in Fig. 2 nach links oder nach rechts bzw. in Fig. 3 nach oben oder nach unten zu bewegen, um z.B. den während eines Fräsbearbeitungsvorgangs die Geometrie der zu bearbeitenden Fläche F bestimmenden Flugkreis 20 von am Werkzeug 18 vorgesehenen Fräs-Schneidplättchen 22 bezüglich der Werkstück-Drehachse B einzustellen.

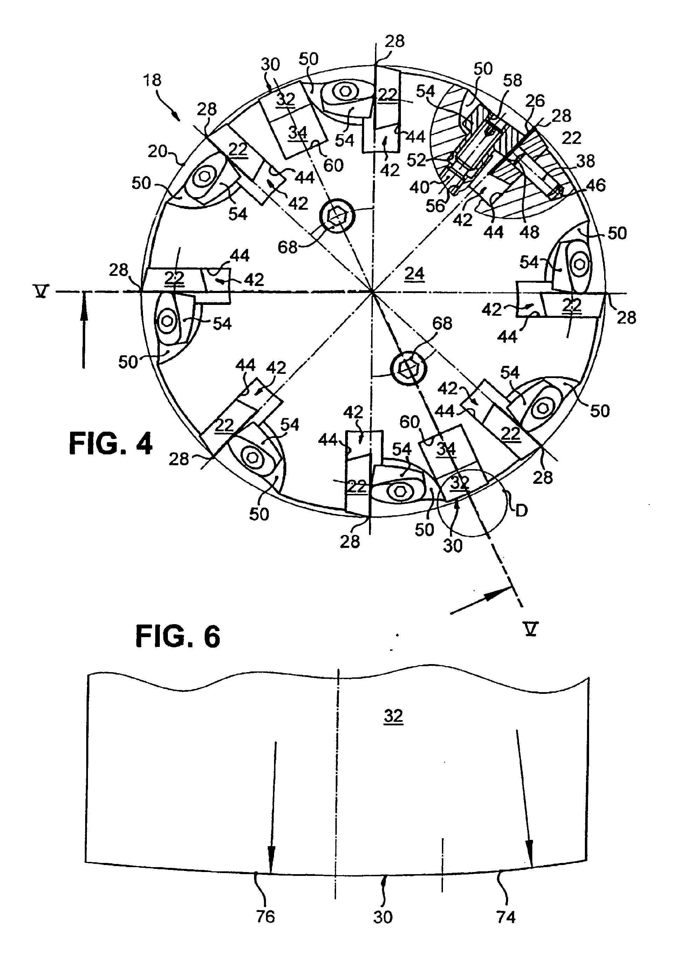

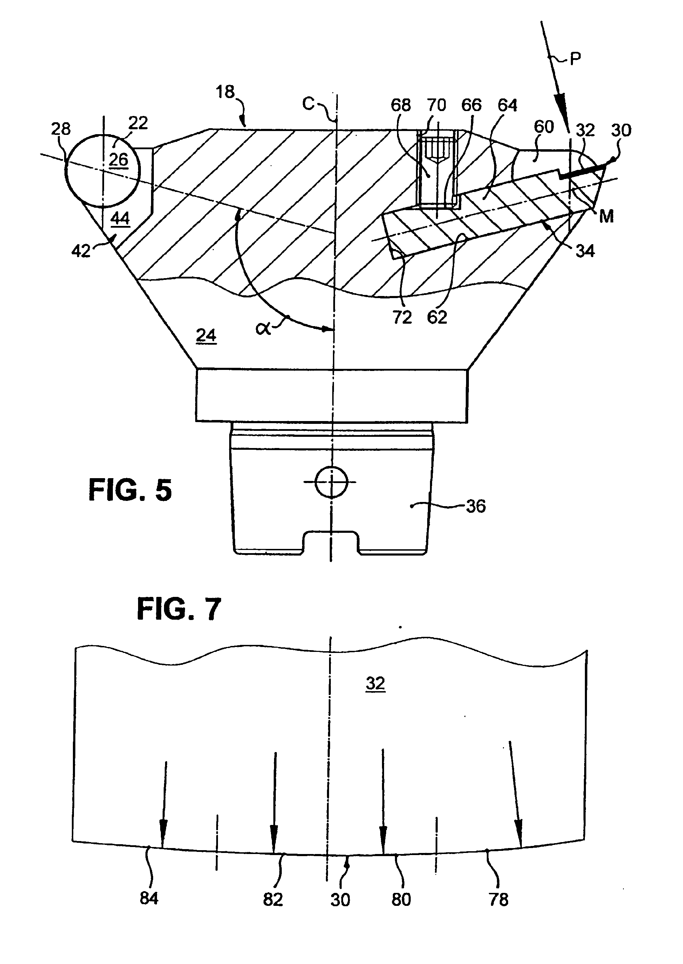

In den Fig. 4 und 5 ist ein für sowohl einen Fräs- als auch einen Drehbearbeitungsvorgang geeignet ausgebildetes Werkzeug 18 näher dargestellt. Das Werkzeug 18 hat in der Art eines Messerkopfs eine Mehrzahl von, im dargestellten Ausführungsbeispiel acht gleichmäßig am Umfang eines Werkzeug-Grundkörpers 24 verteilten Fräs-Schneidplättchen 22, die eine konische Form aufweisen und auf ihrer durchmessergrößeren Stirnseite jeweils mit einer Beschichtung 26 aus z.B. PKD versehen sind, welche eine in der Draufsicht gemäß Fig. 5 gesehen kreisringförmige Fräserschneide 28 ausbildet. Bei einer Drehung des Werkzeugs 18 um die Werkzeug-Drehachse C definieren die Fräserschneiden 28 in einer Ebene senkrecht zur Werkzeug-Drehachse C den bereits erwähnten Flugkreis 20, der in Fig. 4 mit einer Kreislinie dargestellt ist und dessen Durchmesser größer ist als der größte Durchmesser des im wesentlichen konisch zulaufenden Grundkörpers 24.

Ferner ist am Grundkörper 24 auch mindestens eine Drehschneide 30, im dargestellten Ausführungsbeispiel zwei bezüglich der Werkzeug-Drehachse C gegenüberliegend angeordnete Drehschneiden 30 vorgesehen, die jeweils durch ein Schneidplättchen 32 an einem lösbar am Grundkörper 24 befestigten Drehmeißel 34 ausgebildet und gegenüber dem Flugkreis 20 der Fräserschneiden 28 um einen vorbestimmten Betrag nach radial innen versetzt angeordnet sind, wie in Fig. 4 gut zu erkennen ist. Bei beispielsweise einem Durchmesser des Fräserschneiden-Flugkreises 20 von 80 mm sind die Drehschneiden 30 jeweils um ca. 0,2 mm in Richtung der Werkzeug-Drehachse C radial nach innen versetzt bzw. von der Werkzeug-Drehachse C um 39,8 mm beabstandet, so daß sie bei einem Fräsbearbeitungsvorgang nicht mit der zu bearbeitenden Rezeptfläche R der Brillenlinse L in Eingriff kommen können. Wie weiterhin der Fig. 5 zu entnehmen ist, liegt die Drehschneide 30 im wesentlichen auf der Höhe des Flugkreises 20 der Fräserschneiden 28 in einer gedachten Ebene parallel zu einer Ebene, die senkrecht zu einer durch die Werkzeug-Drehachse C und die Mittelachse M des zugehörigen Drehmeißels 34 aufgespannten Ebene verläuft und die Mittelachse M des Drehmeißels 34 enthält, während die Fräserschneiden 28 jeweils in einer Ebene liegen, welche die Werkzeug-Drehachse C enthält.

Die Befestigung der Fräs-Schneidplättchen 22 am Grundkörper 24 an dessen von seinem in an sich bekannter Weise ausgebildeten Aufnahmeabschnitt 36 abgewandten Ende ist in Fig. 4 links oben mittels zweier Aufbrüche näher dargestellt. Während der in Fig. 4 weiter rechts liegende Aufbruch in einer zur Zeichenebene parallel liegenden Ebene ausgeführt wurde, die die Mittelachse eines das entsprechende Fräs-Schneidplättchen 22 am Grundkörper 24 positionierenden Stifts 38 enthält, liegt der in Fig. 4 linke Aufbruch in einer Ebene, die tatsächlich unter einem Winkel zur Zeichenebene verläuft und die Mittelachse des dargestellten Gewindestifts 40 enthält, zur Vereinfachung der Darstellung jedoch in die Zeichenebene gekippt wurde.

Gemäß insbesondere Fig. 4 ist der metallische Grundkörper 24 an seinem Außenumfang mit gleichmäßig winkelbeabstandeten, identisch ausgebildeten Aussparungen 42 versehen, die jeweils eine Planfläche 44 zur flächigen Auflagerung des jeweiligen Fräs-Schneidplättchens 22 aufweisen. Die Lage der Planfläche 44 und die Dicke des jeweiligen Fräs-Schneidplättchens 22 sind derart aufeinander abgestimmt, daß die Fräserschneide 28 eines auf die Planfläche 44 aufgelegten Fräs-Schneidplättchens 22 mit der Werkzeug-Drehachse C in einer Ebene liegt bzw. radial zu dieser ausgerichtet ist. In der Planfläche 44 ist ein Sackloch 46 ausgebildet, ist das der zylindrische Stift 38 so eingepreßt ist, daß ein Ende des metallischen Stifts 38 von der Planfläche 44 vorsteht. Auf das von der Planfläche 44 vorstehende Ende des Stifts 38 ist das mittig mit einer Bohrung 48 versehene Fräs-Schneidplättchen 22 aufgesetzt. Die Bohrung 48 des Fräs-Schneidplättchens 22 wird schließlich auf der von der Planfläche 44 abgewandten Seite des Fräs-Schneidplättchens 22 von der Beschichtung 26 abgedeckt.

Wie weiterhin in Fig. 4 zu erkennen ist, hat jede der Aussparungen 42 auch einen schrägen Wandabschnitt 50, in den ein Bohrungsabschnitt 52 eingebracht ist, der der Führung eines zylindrischen Fortsatzes einer Spannpratze 54 dient. An den Bohrungsabschnitt 52 des Grundkörpers 24 schließt sich ein Innengewindeabschnitt 56 an, dessen Mittelachse in Verlängerung der Mittelachse des Bohrungsabschnitts 52 mit der Ebene der Planfläche 44 der Aussparung 42 unter einem Winkel verläuft. Auch die Spannpratze 54 hat einen über ihre gesamte Länge verlaufenden Innengewindeabschnitt 58 mit gegenüber dem Innengewindeabschnitt 56 im Grundkörper 24 umgekehrter Gewindesteigung. Dementsprechend ist der in die Innengewindeabschnitte 56, 58 eingeschraubte Gewindestift 40 ausgehend von seinen Enden mit voneinander getrennten Außengewindeabschnitten umgekehrter Steigung, d.h. einem Rechtsgewinde und einem Linksgewinde versehen. Es ist ersichtlich, daß durch Drehen des hierfür mit einem Innensechskant versehenen Gewindestifts 40 die Spannpratze 54 nach radial innen oder außen bewegt werden kann, wobei sich die Spannpratze 54 infolge der Winkelanstellung der Mittelachse des Gewindestifts 40 bezüglich der Planfläche 44 der Planfläche 44 nähert bzw. sich davon entfernt. Auf diese Weise kann das Fräs-Schneidplättchen 22 mittels der Spannpratze 54 gegen die Planfläche 44 verspannt bzw. geklemmt werden.

Im Zusammenhang mit den Fräs-Schneidplättchen 22 zu erwähnen ist schließlich noch, daß bei einem Fräsbearbeitungsvorgang von dem Kreisumfang der Fräserschneide 28 nur ein Winkel von etwa 50°, d.h. nur etwa ein Siebtel des Schneidenumfangs herangezogen wird. Somit können die Fräs-Schneidplättchen 22 nach Verschleiß des ersten Schneidensektors noch sechsmal in eine neue Position gedreht werden.

Gemäß Fig. 4 sind die Drehmeißel 34 in Umfangsrichtung des Werkzeugs 18 gesehen in etwa symmetrisch zwischen den Fräserschneiden 28 benachbarter Fräs-Schneidplättchen 22 angeordnet. Dabei hat der Grundkörper 24 für jeden Drehmeißel 34 eine Aussparung 60, von der ausgehend in den Grundkörper 24 ein Sackloch 62 zur Aufnahme eines im Querschnitt kreisförmigen Schafts 64 des Drehmeißels 34 eingebracht ist, wie die Fig. 5 zeigt. Das Sackloch 62 verläuft in radialer Richtung, d.h. in Richtung der Werkzeug-Drehachse C, wobei die Mittelachse des Sacklochs 62 mit der Werkzeug-Drehachse C einen vorbestimmten Winkel, im dargestellten Ausführungsbeispiel einen Winkel von ca. 75° einschließt. Wie weiterhin in Fig. 5 zu erkennen ist, hat der metallische Schaft 64 des Drehmeißels 34 eine schräge Aussparung 66 bzw. einen schrägen Einschliff, an dem eine mit einem Innensechskant versehene Madenschraube 68 anliegt, die in eine parallel zur Werkzeug-Drehachse C in den Grundkörper 24 eingebrachte Gewindebohrung 70 eingeschraubt ist. Es ist ersichtlich, daß die Madenschraube 68 zum einen den Drehmeißel 34 lösbar in dem Sackloch 62 des Grundkörpers 24 befestigt, und zum anderen den Drehmeißel 34 auf Anschlag gegen den Boden 72 des Sacklochs 62 hält.

Das lösbar oder als Beschichtung am Drehmeißel 34 angebrachte Schneidplättchen 32 kann den jeweiligen Erfordernissen entsprechend, insbesondere spezifisch für den zu bearbeitenden Werkstoff, aus polykristallinem Diamant (PKD), Naturdiamant oder aber auch Hartmetall mit oder ohne Verschleißschutz-Beschichtung bestehen. Was die Geometrie der Drehschneide 30 angeht, sind in den Fig. 6 und 7 zwei verschiedene Varianten der Drehschneide 30 vergrößert dargestellt, bei denen es sich bereits um Weiterbildungen der einfachsten Variante handelt, gemäß der die Drehschneide 30 über die gesamte Schneidenbreite eine konstante Krümmung aufweist. Die Krümmung hat hierbei einen Radius, der im wesentlichen dem Abstand der Drehschneide 30 zur Werkzeug-Drehachse C entspricht, wodurch bei der Drehbearbeitung Formfehler infolge einer falschen Winkellage der Drehschneide 30 bezüglich der zu bearbeitenden Rezeptfläche R der Brillenlinse L vermieden werden. Mit den obigen Zahlenwerten wäre dies hier ein Radius von ca. 39,8 mm.

Den in den Fig. 6 und 7 dargestellten Varianten der Drehschneide 30 ist nun gemein, daß die Drehschneide 30 Teilbereiche von verschiedener, jeweils konstanter Krümmung aufweist, wobei die Krümmung in Drehrichtung des Werkzeugs 18 gesehen ausgehend von einem Ende der Drehschneide 30 zum anderen Ende der Drehschneide 30 von Teilbereich zu Teilbereich abnimmt. So hat die in Fig. 6 gezeigte Drehschneide 30 zwei Teilbereiche 74, 76, von denen der eine, als Feinbearbeitungsteil dienende Teilbereich 76 eine konstante Krümmung mit einem Radius aufweist, der wie oben beschrieben im wesentlichen dem Abstand der Drehschneide 30 zur Werkzeug-Drehachse C entspricht, während der andere, als Schruppbearbeitungsteil dienende Teilbereich 74 eine konstante Krümmung mit einem Radius aufweist, der deutlich kleiner ist als der Radius des erstgenannten Teilbereichs 76 und beispielsweise 15 mm beträgt. Das Breitenverhältnis der Teilbereiche 74 und 76 in Querrichtung des Schneidplättchens 32 beträgt im dargestellten Ausführungsbeispiel ca. 2 (Teilbereich 74) zu 5 (Teilbereich 76).

Bei dem in Fig. 7 dargestellten Schneidplättchen 32 ist die Drehschneide 30 sogar in vier verschiedene Teilbereiche 78, 80, 82 und 84 unterschiedlicher Breite unterteilt, deren Krümmung von rechts nach links abnimmt. Die in Fig. 7 von rechts nach links zugehörigen Radien könnten beispielsweise 40 mm, 80 mm, 120 mm und 200 mm betragen. Die Gesamtbreite der Drehschneide 30 in Querrichtung des Schneidplättchens 32 kann dennoch unter 10 mm bleiben.

Aus der obigen Beschreibung ist ersichtlich, daß die Geometrie der Drehschneide 30 in weiteren Grenzen entsprechend der Geometrie und dem Werkstoff der zu bearbeitenden Werkstücke und den durchzuführenden Bearbeitungsverfahren sowie unabhängig von der Geometrie der Fräserschneiden 28 gewählt werden kann, wobei durch die Möglichkeit, verschiedene Teilbereiche der Drehschneide mit der zu bearbeitenden Fläche des Werkstücks in Bearbeitungseingriff zu bringen, auch die Gesamtstandzeit der Drehschneide gegenüber dem Stand der Technik deutlich erhöht werden kann.

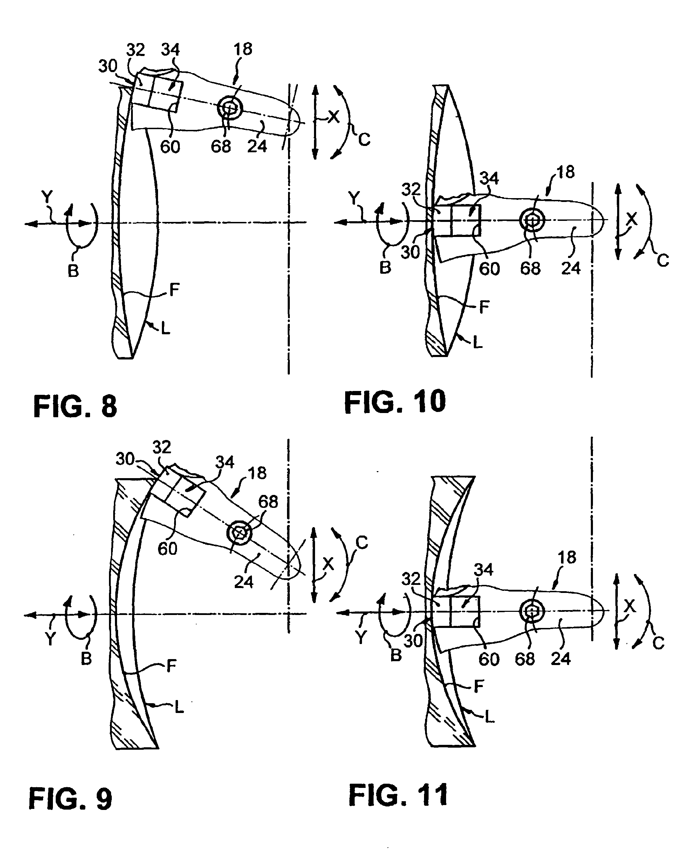

Zur näheren Erläuterung eines bevorzugten Verfahrensablaufs wird nunmehr auf die Fig. 8 bis 11 Bezug genommen, die allerdings nur einen Drehbearbeitungsvorgang veranschaulichen. Dem Drehbearbeitungsvorgang vorgelagert ist ein Fräsbearbeitungsvorgang, wie er prinzipiell in der DE 195 29 786 C1 der Anmelderin beschrieben wird. Dieser Fräsbearbeitungsvorgang umfaßt jedenfalls einen Einstech-Arbeitsgang, bei dem das um die Werkzeug-Drehachse C drehzahlgeregelt rotierende Werkzeug 18 und die drehwinkelgeregelt um die Werkstück-Drehachse B drehende Brillenlinse L in wenigstens einer von den zwei Achsrichtungen X und Y derart lagegeregelt relativ zueinander bewegt werden, daß die Fräserschneiden 28 mindestens im Bereich des Außenrands der Brillenlinse L eine ringmuldenförmigen Ausnehmung erzeugen, bevor das Werkzeug 18 in einem formgebenden Arbeitsgang entlang eines spiralförmigen Weges bahngeregelt über die Brillenlinse L von außen nach innen geführt wird, um weiteres Material abzutragen. Wahlfreie, wenn auch bevorzugt mitablaufende Arbeitsgänge bei dem Fräsbearbeitungsvorgang sind die Randbearbeitung und das Facettieren der Brillenlinse L. Bei der Randbearbeitung wird mittels des rotierenden Werkzeugs 18 eine Bearbeitung des Brillenlinsenrohlings z.B. auf die durch die Brillengestellform vorgegebene Umfangskontur vorgenommen, während bei dem Facettieren die obere bzw. innere Umfangskante des Brillenlinsenrohlings mittels des rotierenden Werkzeugs 18 abgeschrägt wird. Diese Verfahrensschritte sind dem Fachmann hinlänglich bekannt, so daß an dieser Stelle hierauf nicht weiter eingegangen werden soll.

Für den Drehbearbeitungsvorgang wird die Drehung des Werkzeugs 18 zunächst gestoppt und sodann die Drehschneide 30 des Werkzeugs 18 durch drehwinkelgeregelte Drehung des Werkzeugs 18 um die Werkzeug-Drehachse C in eine vorbestimmte Winkellage gebracht. Nun wird die somit auch in eine vorbestimmte Winkellage gebrachte Drehschneide 30 des Werkzeugs 18 durch eine lagegeregelte Relativbewegung von Brillenlinse L und Werkzeug 18 in wenigstens einer der beiden Achsrichtungen X und Y tangential im Bereich des Außenrands der zu bearbeitenden Rezeptfläche F an die Rezeptfläche F der drehwinkelgeregelt um die Werkstück-Drehachse B gedrehten Brillenlinse L angelegt. Dieser Zustand ist in Fig. 8 dargestellt. Wie oben in der Beschreibung der Ausbildung des Werkzeugs 18 schon erwähnt, kann hier den jeweiligen Bearbeitungserfordernissen entsprechend durch die drehwinkelgeregelte Verschwenkmöglichkeit des Werkzeugs 18 ein bestimmter Drehmeißel 34 mit einem Schneidplättchen 32 aus einem bestimmten Werkstoff bzw. ein bestimmter Bereich der Drehschneide 30 mit einer bestimmten Krümmung an die Rezeptfläche F der Brillenlinse L angelegt werden. Ein notwendiger Spanabtrag zur Feinbearbeitung und zum Ausgleichen von vom Fräsen her resultierenden Ungenauigkeiten ist hierdurch einstellbar.

Sodann wird die Drehschneide 30 durch lagegeregelte Relativbewegung von Brillenlinse L und Werkzeug 18 in den beiden Achsrichtungen X und Y sowie drehwinkelgeregelte Drehung des Werkzeugs 18 um die Werkzeug-Drehachse C in Abhängigkeit von der Drehwinkelstellung der Brillenlinse L um die Werkstück-Drehachse B entlang eines spiralförmigen Weges, der in seiner Form vorzugsweise der Form einer archimedischen Spirale ähnelt, über die Brillenlinse L geführt. Der dabei gefahrene Spiralabstand ist einerseits kleiner als der Spiralabstand des spiralförmigen Weges bei dem vorgeschalteten Fräsbearbeitungsvorgang, um die Rauhtiefe der bearbeiteten Fläche F in vorbestimmten Grenzen zu halten, andererseits aber größer als bei herkömmlichen Drehbearbeitungsverfahren, bedingt durch den verhältnismäßig großen Radius der Drehschneide 30, der auch für eine sehr kleine kinematische Rauhigkeit der erzeugten Fläche F sorgt.

Die Fig. 9 veranschaulicht in diesem Zusammenhang, daß bei dem Drehbearbeitungsvorgang die Position der Drehschneide 30 durch CNC-geregelte Drehung der Werkzeugspindel 12 auch bei der Erzeugung von nicht-rotationssymmetrischen Flächen, im dargestellten Verfahrensbeispiel eine torische Fläche F, stets an die jeweilige Krümmung der Fläche F so angepaßt wird, daß die Drehschneide 30 tangential an der zu bearbeitenden Fläche F zur Anlage kommt. Es handelt sich hierbei um ein CNC-geregeltes, kontinuierliches Nachführen der Drehschneide 30. Weiterhin zeigt ein Vergleich der Fig. 9 mit der Fig. 8, daß bei dem Drehbearbeitungsvorgang in Abhängigkeit von der Drehwinkelstellung der Brillenlinse L nicht nur (a) die Drehschneide 30 um die Werkzeug-Drehachse C definiert hin- und hergeschwenkt wird, sondern auch (b) die Brillenlinse L in der Achsrichtung Y definiert hin- und herbewegt wird, d.h. in Fig. 9 nach rechts und nach links, und (c) das Werkzeug 18 in der Achsrichtung X definiert hin- und herbewegt wird, d.h. in Fig. 9 nach oben und nach unten. Im übrigen ist in Fig. 9 der Eingriffsbereich zwischen der Drehschneide 30 und der zu bearbeitenden Fläche F der Brillenlinse L zur Vereinfachung der Darstellung zwar wie in Fig. 8 in unmittelbarer Nähe des Randes der zu bearbeitenden Brillenlinse L gezeigt, tatsächlich ist der Eingriffsbereich aber infolge der Führung der Drehschneide 30 entlang des spiralförmigen Weges über die Brillenlinse L schon ein kleines Stück nach radial innen gewandert.

Die Fig. 10 und 11 veranschaulichen schließlich das Ende des Drehbearbeitungsvorgangs. Sobald die Drehschneide 30 auf ihrem spiralförmigen Weg über die Brillenlinse L die optische Achse der Brillenlinse L erreicht hat und die Brillenlinse L noch einmal um 360° gedreht wurde, wird letztere vom Werkzeug 18 in der Y-Achse wegbewegt, so daß die Drehschneide 30 von der Brillenlinse L außer Eingriff kommt. Als Drehbearbeitungsergebnis liegt eine (fein)gedrehte, in Bezug auf Geometrietreue und Rauhtiefe äußerst feine Rezeptfläche F von polierreifer Qualität vor.

Für den Fachmann ist ersichtlich, daß an der oben beschriebenen Vorrichtung zur Bearbeitung von Werkstücken aus sprödharten Materialien, wie z.B. Mineralgläsern oder Keramikformen, auch gesinterte scheibenförmige Schleifwerkzeuge zum Einsatz kommen können, wie sie z.B. in der DE 195 29 786 C1 der Anmelderin unter Bezugnahme auf die Fig. 3 und 4 beschrieben werden, nachdem die obige Vorrichtung mit ihren vier CNC-geregelten Achsen X, Y, B und C auch sämtliche in der DE 195 29 786 C1 beschriebenen Bewegungsabläufe ausführen kann. Somit ist die beschriebene Vorrichtung für die Bearbeitung aller Materialien und Flächen, einschließlich prismatischer Flächen und Freiformflächen, im sogenannten "RX"-Bereich, d.h. auf dem Gebiet der Rezeptbrillenglasbearbeitung geeignet. Hierbei ist sogar der Einsatz als reine Drehbearbeitungsvorrichtung denkbar, bei der die Drehschneide wie beschrieben auch bezüglich der bearbeiteten Fläche verschwenkbar ist.

Weiterhin ist für den Fachmann ersichtlich, daß, obgleich oben eine Linearbewegungsmöglichkeit für die Werkstückspindel (Y-Achse) und eine Linearbewegungsmöglichkeit für die Werkzeugspindel (X-Achse) beschrieben wurde, den jeweiligen Erfordernissen entsprechend die resultierende Relativbewegung zwischen Werkstück und Werkzeug auch erzeugt werden kann, indem für die Werkstückspindel oder die Werkzeugspindel mittels beispielsweise einer Kreuzschlittenanordnung zwei Linearbewegungsmöglichkeiten (X- und Y-Achse) vorgesehen werden, während die jeweils andere Spindel keine Linearbewegungsmöglichkeit hat.

Es wird eine Vorrichtung zur Flächenbearbeitung von u.a. Kunststoff-Brillenlinsen offenbart, die eine Werkstückspindel aufweist, mittels der die Brillenlinse drehwinkelgeregelt um eine Werkstück-Drehachse B antreibbar ist, sowie eine Werkzeugspindel hat, mittels der ein Werkzeug um eine Werkzeug-Drehachse C drehend antreibbar ist, wobei Werkstück- und Werkzeugspindel lagegeregelt in zwei rechtwinklig verlaufenden Achsrichtungen X, Y relativ zueinander bewegbar sind. Erfindungsgemäß ist für eine Drehbearbeitung der zu bearbeitenden Fläche der Brillenlinse das Werkzeug mittels der Werkzeugspindel auch drehwinkelgeregelt um die Werkzeug-Drehachse C verschwenkbar, so daß eine am Werkzeug vorgesehene Drehschneide in Abhängigkeit von der Drehwinkelstellung der Brillenlinse mit der zu bearbeitenden Fläche der Brillenlinse in einen definierten Drehbearbeitungseingriff bringbar ist. Die Erfindung umfaßt auch ein kombiniertes Fräs- und Drehbearbeitungswerkzeug sowie ein kombiniertes Fräs- und Drehbearbeitungsverfahren. Im Ergebnis sind bei der Flächenbearbeitung in einfacher und effizienter Weise hohe Zerspanungsleistungen und sehr gute Oberflächenqualitäten erzielbar.

### Bezugszeichenliste

- 10: Werkstückspindel
- 12: Werkzeugspindel
- 14: Arbeitsraum
- 16: Blockstück
- 18: Werkzeug
- 20: Flugkreis
- 22: Fräs-Schneidplättchen
- 24: Grundkörper
- 26: Beschichtung
- 28: Fräserschneide
- 30: Drehschneide
- 32: Dreh-Schneidplättchen
- 34: Drehmeißel
- 36: Aufnahmeabschnitt
- 38: Stift
- 40: Gewindestift
- 42: Aussparung
- 44: Planfläche
- 46: Sackloch
- 48: Bohrung
- 50: schräger Wandabschnitt
- 52: Bohrungsabschnitt
- 54: Spannpratze
- 56: Innengewindeabschnitt
- 58: Innengewindeabschnitt
- 60: Aussparung
- 62: Sackloch
- 64: Schaft
- 66: Aussparung
- 68: Madenschraube
- 70: Gewindebohrung
- 72: Boden
- 74: Teilbereich
- 76: Teilbereich
- 78: Teilbereich
- 80: Teilbereich
- 82: Teilbereich
- 84: Teilbereich

- B: Werkstück-Drehachse
- C: Werkzeug-Drehachse
- F: Rezeptfläche
- L: Werkstück / Brillenlinse
- M: Mittelachse des Drehmeißels
- X: Linearachse Werkzeug
- Y: Linearachse Werkstück

- α: Winkel zwischen Werkstück-Drehachse B und Werkzeug-Drehachse C

## Patentansprüche

1. Verfahren zur Flächenbearbeitung von Werkstücken (L) aus nicht-sprödharten Materialien in der Optikfertigung, wie Brillenlinsen aus Kunststoff, bei welchem das im Drehwinkel geregelt um eine Werkstück-Drehachse (B) rotierende Werkstück (L) einem Fräsbearbeitungsvorgang durch ein Werkzeug (18) ausgesetzt wird, das um eine mit der Werkstück-Drehachse (B) einen vorbestimmten Winkel (α) einschließende Werkzeug-Drehachse (C) rotiert, wobei das Werkstück (L) und das Werkzeug (18) in wenigstens einer von zwei rechtwinklig verlaufenden Achsrichtungen (X, Y) derart lagegeregelt relativ zueinander bewegt werden, daß das Werkzeug (18) während eines Einstech-Arbeitsgangs mindestens im Bereich des Außenrands des Werkstücks (L) eine ringmuldenförmige Ausnehmung erzeugt, bevor das Werkzeug (18) in einem formgebenden Arbeitsgang entlang eines spiralförmigen Weges über das Werkstück (L) weiteres Material abträgt, **dadurch gekennzeichnet, daß** sich an den Fräsbearbeitungsvorgang ein Drehbearbeitungsvorgang anschließt, bei dem eine am Werkzeug (18) vorgesehene Drehschneide (30) durch eine lagegeregelte Relativbewegung von Werkstück (L) und Werkzeug (18) in wenigstens einer der zwei Achsrichtungen (X, Y) und eine im Drehwinkel geregelte Schwenkbewegung des Werkzeugs (18) um die Werkzeug-Drehachse (C) tangential an die zu bearbeitende Fläche (F) des im Drehwinkel geregelt um die Werkstück-Drehachse (B) gedrehten Werkstücks (L) angelegt und im Drehbearbeitungseingriff entlang eines spiralförmigen Weges über das Werkstück (L) geführt wird.

2. Verfahren nach Anspruch 1, **dadurch gekennzeichnet, daß** bei dem Drehbearbeitungsvorgang wenigstens ein Teilbereich einer Drehschneide (30) des Werkzeugs (18) mit der zu bearbeitenden Fläche (F) des Werkstücks (L) in Drehbearbeitungseingriff gebracht wird, wobei zumindest der in Drehbearbeitungseingriff gebrachte Teilbereich der Drehschneide (30) gleich oder nur geringfügig stärker gekrümmt ist als die zu bearbeitende Fläche (F).

3. Verfahren nach Anspruch 1 oder 2, **dadurch gekennzeichnet, daß** bei dem Drehbearbeitungsvorgang wenigstens ein Teilbereich einer Drehschneide (30) des Werkzeugs (18) mit der zu bearbeitenden Fläche (F) des Werkstücks (L) in Drehbearbeitungseingriff gebracht wird, wobei das Werkzeug (18) für weitere Drehbearbeitungsvorgänge in Abhängigkeit vom Verschleiß der Drehschneide (30) um die Werkzeug-Drehachse (C) im Drehwinkel geregelt verschwenkt wird, um einen anderen Teilbereich dieser Drehschneide (30) oder wenigstens einen Teilbereich einer anderen Drehschneide (30) mit der zu bearbeitenden Fläche (F) des Werkstücks (L) in Drehbearbeitungseingriff zu bringen.

4. Verfahren nach einem der vorhergehenden Ansprüche, **dadurch gekennzeichnet, daß** für den Drehbearbeitungsvorgang am Werkzeug (18) eine Drehschneide (30) eingesetzt wird, die unterschiedlich gekrümmte Teilbereiche (74, 76; 78, 80, 82, 84) aufweist, wobei das Werkzeug (18) in Abhängigkeit von dem gewünschten Zerspanungsvolumen und der gewünschten Oberflächenqualität der bearbeiteten Fläche des Werkstücks (L) derart um die Werkzeug-Drehachse (C) im Drehwinkel geregelt verschwenkt wird, daß für ein im Verhältnis großes Zerspanungsvolumen ein stärker gekrümmter Teilbereich der Drehschneide (30) mit der zu bearbeitenden Fläche (F) des Werkstücks (L) in Drehbearbeitungseingriff gebracht wird, während für eine im Verhältnis hohe Oberflächenqualität ein schwächer gekrümmter Teilbereich der Drehschneide (30) mit der zu bearbeitenden Fläche (F) des Werkstücks (L) in Drehbearbeitungseingriff gebracht wird.

5. Verfahren nach einem der vorhergehenden Ansprüche, **dadurch gekennzeichnet, daß** bei dem Drehbearbeitungsvorgang eine mit der zu bearbeitenden Fläche (F) im Drehbearbeitungseingriff befindliche Drehschneide (30) entlang eines spiralförmigen Weges über das Werkstück (L) geführt wird, der eine Form ähnlich einer archimedischen Spirale aufweist.

6. Verfahren nach einem der vorhergehenden Ansprüche, **dadurch gekennzeichnet, daß** wenigstens während des Drehbearbeitungsvorgangs ein Hochdruck-Kühlmittelstrahl auf die Bearbeitungseingriffsstelle zwischen Werkzeug (18) und Werkstück (L) gerichtet wird.

7. Werkzeug (18) zur Flächenbearbeitung von Werkstücken (L) aus nicht-sprödharten Materialien in der Optikfertigung, wie Brillenlinsen aus Kunststoff, insbesondere für die Durchführung des Verfahrens nach einem der vorhergehenden Ansprüche, mit einem Grundkörper (24), an dem eine Mehrzahl von Fräserschneiden (28) vorgesehen ist, die bei einer Drehung des Werkzeugs (18) um eine Werkzeug-Drehachse (C) in einer Ebene senkrecht zur Werkzeug-Drehachse (C) einen Flugkreis (20) definieren, wobei am Grundkörper (24) auch mindestens eine Drehschneide (30) vorgesehen ist, die gegenüber dem Flugkreis (20) der Fräserschneiden (28) um einen vorbestimmten Betrag nach radial innen versetzt angeordnet ist, und wobei die Drehschneide (30) eine konstante Krümmung mit einem Radius hat, der im wesentlichen dem Abstand der Drehschneide (30) zur Werkzeug-Drehachse (C) entspricht, oder Teilbereiche (74, 76; 78, 80, 82, 84) von verschiedener, jeweils konstanter Krümmung aufweist, von denen ein Teilbereich (76; 78) eine konstante Krümmung mit einem Radius hat, der im wesentlichen dem Abstand der Drehschneide (30) zur Werkzeug-Drehachse (C) entspricht.

8. Werkzeug (18) nach Anspruch 7, wobei am Grundkörper (24) mehrere Drehschneiden (30) vorgesehen sind, die vorzugsweise gleichmäßig am Umfang des Grundkörpers (24) verteilt sind.

9. Werkzeug (18) nach Anspruch 7 oder 8, wobei die Drehschneide (30) Teilbereiche (74, 76; 78, 80, 82, 84) von verschiedener, jeweils konstanter Krümmung aufweist, die in Drehrichtung des Werkzeugs (18) gesehen ausgehend von einem Ende der Drehschneide (30) zum anderen Ende der Drehschneide (30) von Teilbereich zu Teilbereich kontinuierlich abnimmt.

10. Werkzeug (18) nach Anspruch 7 oder 8, wobei die Drehschneide (30) zwei Teilbereiche (74, 76) hat, von denen der eine Teilbereich (76) eine konstante Krümmung mit einem Radius aufweist, der im wesentlichen dem Abstand der Drehschneide (30) zur Werkzeug-Drehachse (C) entspricht, während der andere Teilbereich (74) eine konstante Krümmung mit einem Radius aufweist, der deutlich kleiner ist als der Radius des erstgenannten Teilbereichs (76).

11. Werkzeug (18) nach einem der Ansprüche 7 bis 10, wobei die Drehschneide (30) durch ein Schneidplättchen (32) an einem Drehmeißel (34) ausgebildet ist, der lösbar am Grundkörper (24) befestigt ist.

12. Werkzeug (18) nach Anspruch 11, wobei der Grundkörper (24) mit einem Sackloch (62) zur Aufnahme eines im Querschnitt kreisförmigen Schafts (64) des Drehmeißels (34) versehen ist und der Schaft (64) eine schräge Aussparung (66) aufweist, an dem eine in eine Gewindebohrung (70) des Grundkörpers (24) einschraubbare Schraube (68) anliegt, um den Drehmeißel (34) lösbar am Grundkörper (24) zu befestigen und auf Anschlag gegen den Boden (72) des Sacklochs (62) zu halten.

13. Vorrichtung zur Flächenbearbeitung von Werkstücken (L) aus nicht-sprödharten Materialien in der Optikfertigung, wie Brillenlinsen aus Kunststoff, insbesondere für die Durchführung des Verfahrens nach einem der Ansprüche 1 bis 6 unter Verwendung eines Werkzeugs (18) insbesondere nach einem der Ansprüche 7 bis 12, mit einer Werkstückspindel (10), mittels der das Werkstück (L) im Drehwinkel geregelt um eine Werkstück-Drehachse (B) drehend antreibbar ist, und einer Werkzeugspindel (12), mittels der das Werkzeug (18) um eine Werkzeug-Drehachse (C) drehend antreibbar ist, die mit der Werkstück-Drehachse (B) einen vorbestimmten Winkel (α) einschließt, wobei die Werkstückspindel (10) und die Werkzeugspindel (12) lagegeregelt in zwei rechtwinklig verlaufenden Achsrichtungen (X, Y) relativ zueinander bewegbar sind, **dadurch gekennzeichnet, daß** für eine Drehbearbeitung der zu bearbeitenden Fläche (F) des Werkstücks (L) das Werkzeug (18) mittels der Werkzeugspindel (12) im Drehwinkel geregelt um die Werkzeug-Drehachse (C) verschwenkbar ist, so daß eine am Werkzeug (18) vorgesehene Drehschneide (30) in Abhängigkeit von der Drehwinkelstellung des Werkstücks (L) mit der zu bearbeitenden Fläche (F) des Werkstücks (L) in einen definierten Drehbearbeitungseingriff bringbar ist.

14. Vorrichtung nach Anspruch 13, **dadurch gekennzeichnet, daß** sowohl die Werkstückspindel (10) als auch die Werkzeugspindel (12) horizontal ausgerichtet sind.

## Claims

1. Method for the surface machining of workpieces (L) composed of non-brittle materials in optical lens manufacturing, such as plastic spectacle lenses, in which the workpiece (L) rotating with a controlled angle of rotation about an axis of workpiece rotation (B) is subjected to a milling operation by a tool (18), which rotates about an axis of tool rotation (C) enclosing a predetermined angle (α) with the axis of workpiece rotation (B), the workpiece (L) and the tool (18) being movable relative to one another with their position controlled in at least one of two axes (X, Y) running at right angles, in such a way that the tool (18) during a recessing operation produces an annular trough-shaped recess at least in the area of the outer edge of the workpiece (L), before the tool (18) in a shaping operation abrades further material along a spiral path over the workpiece (L), **characterized in that** said milling operation is followed by a turning machining operation, in which a turning cutting edge (30) provided on the tool (18) is applied, by a positionally controlled relative movement of workpiece (L) and tool (18) in at least one of the two axes (X, Y) and by a swivel movement of the tool (18), with a controlled angle of rotation about the axis of tool rotation (C), tangentially to the surface (F) to be machined on the workpiece (L) that is being rotated with a controlled angle of rotation about the axis of workpiece rotation (B), and, in turning machining engagement, is guided along a spiral path over the workpiece (L).

2. Method according to claim 1, **characterized in that** in the turning machining operation at least one part of a turning cutting edge (30) of the tool (18) is brought into turning machining engagement with the surface (F) of the workpiece (L) to be machined, at least that part of the turning cutting edge (30) brought into turning machining engagement being equally or only slightly more curved than the surface (F) to be machined.

3. Method according to claim 1 or 2, **characterized in that** in the turning machining operation at least one part of a turning cutting edge (30) of the tool (18) is brought into turning machining engagement with the surface (F) of the workpiece (L) to be machined, the tool (18) for further turning machining operations being swivelled with a controlled angle of rotation about the axis of tool rotation (C) as a function of the wear of the turning cutting edge (30), in order to bring another part of this turning cutting edge (30) or at least a part of another turning cutting edge (30) into turning machining engagement with the surface (F) of the workpiece (L) to be machined.

4. Method according to one of the preceding claims, **characterized in that** for the turning machining operation a turning cutting edge (30) is used on the tool (18) which has differently curved parts (74, 76; 78, 80, 82, 84), the tool (18) being swivelled with a controlled angle of rotation about the axis of tool rotation (C) as a function of the desired cutting volume and the desired surface quality of the machined surface (F) of the workpiece (L), in such a way that for a comparatively large cutting volume a more heavily curved part of the turning cutting edge (30) is brought into turning machining engagement with the surface (F) of the workpiece (L) to be machined, whereas for a comparatively high surface quality a less heavily curved part of the turning cutting edge (30) is brought into turning machining engagement with the surface (F) of the workpiece (L) to be machined.

5. Method according to one of the preceding claims, **characterized in that** in the turning machining operation a turning cutting edge (30) in turning machining engagement with the surface (F) to be machined is guided over the workpiece (L) along a spiral path having a shape similar to an Archimedean spiral.

6. Method according to one of the preceding claims, **characterized in that** a high-pressure coolant jet is directed at the point of machining engagement between tool (18) and workpiece (L) at least during the turning machining operation.

7. Tool (18) for the surface machining of workpieces (L) composed of non-brittle materials in optical lens manufacturing, such as plastic spectacle lenses, particularly for performing the method according to one of the preceding claims, comprising a body (24), on which a plurality of milling cutter edges (28) are provided, which as the tool (18) rotates about an axis of tool rotation (C) define a circular orbit (20) in a plane perpendicular to the axis of tool rotation (C), wherein at least one turning cutting edge (30) is also provided on the body (24), which turning cutting edge is offset radially inwards by a predefined amount in relation to the circular orbit (20) of the milling cutter edges (28), and wherein the turning cutting edge (30) has a constant curvature with a radius which is essentially equal to the distance of the turning cutting edge (30) from the axis of tool rotation (C), or has parts (74, 76; 78, 80, 82, 84) of different, in each case constant curvature, of which one part (76; 78) has a constant curvature with a radius essentially equal to the distance of the turning cutting edge (30) from the axis of tool rotation (C).

8. Tool (18) according to claim 7, wherein multiple turning cutting edges (30) are provided on the body (24), which are preferably distributed uniformly over the circumference of the body (24).

9. Tool (18) according to claim 7 or 8, wherein the turning cutting edge (30) has parts (74, 76; 78, 80, 82, 84) of different, in each case constant curvature, the curvature viewed in the direction of rotation of the tool (18) diminishing continuously from part to part from one end of the turning cutting edge (30) to the other end of the turning cutting edge (30).

10. Tool (18) according to claim 7 or 8, wherein the turning cutting edge (30) has two parts (74, 76), of which one part (76) has a constant curvature with a radius essentially equal to the distance of the turning cutting edge (30) from the axis of tool rotation (C), whilst the other part (74) has a constant curvature with a radius that is distinctly smaller than the radius of the former part (76).

11. Tool (18) according to one of claims 7 to 10, wherein the turning cutting edge (30) is formed by a cutting tip (32) on a turning tool (34) which is detachably fixed to the body (24).

12. Tool (18) according to claim 11, wherein the body (24) is provided with a blind hole (62) for receiving a shank (64) of the turning tool (34) that is circular in cross section, the shank (64) having an inclined recess (66), against which a screw (68) that can be screwed into a tapped hole (70) in the body (24) bears in order to detachably fix the turning tool (34) to the body (24) and to hold it up against the base (72) of the blind hole (62).

13. Device for the surface machining of workpieces (L) of non-brittle materials in optical lens manufacturing, such as plastic spectacle lenses, in particular for performing the method according to one of claims 1 to 6 using a tool (18), in particular according to one of claims 7 to 12, comprising a workpiece spindle (10), by means of which the workpiece (L) can be driven to rotate with a controlled angle of rotation about an axis of workpiece rotation (B), and a tool spindle (12), by means of which the tool (18) can be driven to rotate about an axis of tool rotation (C), which encloses a predetermined angle (α) with the axis of workpiece rotation (B), the workpiece spindle (10) and the tool spindle (12) being movable relative to one another with their positions controlled in two axes (X, Y) running at right angles, **characterized in that** for a turning machining of the surface (F) of the workpiece (L) to be machined, the tool (18) can be swivelled by means of the tool spindle (12) with a controlled angle of rotation about the axis of tool rotation (C), so that a turning cutting edge (30) provided on the tool (18) can be brought into a defined turning machining engagement with the surface (F) of the workpiece (L) to be machined as a function of the angle of rotation of the workpiece (L).

14. Device according to claim 13, **characterized in that** both the workpiece spindle (10) and the tool spindle (12) are aligned horizontally.

## Revendications

1. Procédé pour l'usinage de surface de pièces d'oeuvre (L) en matériaux ne présentant pas une dureté fragile, dans le domaine de la fabrication d'éléments optiques tels que des lentilles ou verres de lunettes en matériau synthétique, procédé au cours duquel la pièce d'oeuvre (L) en rotation autour d'un axe de rotation de pièce d'oeuvre (B) de manière régulée en angle de rotation, est soumise à une opération d'usinage par fraisage au moyen d'un outil (18) qui tourne autour d'un axe de rotation d'outil (C) formant un angle (α) prédéterminé avec l'axe de rotation de pièce d'oeuvre (B), la pièce d'oeuvre (L) et l'outil (18) étant déplacés relativement l'un par rapport à l'autre, de manière régulée en position, dans au moins l'une de deux directions d'axes (X, Y) perpendiculaires l'une à l'autre, de façon à ce que l'outil (18), pendant une opération d'usinage en plongée, engendre, au moins dans la zone du bord extérieur de la pièce d'oeuvre (L), un évidement en forme de cavité annulaire, avant que l'outil (18), lors d'une opération d'usinage de forme, produise un enlèvement de matériau supplémentaire le long d'un parcours en forme de spirale balayant la pièce d'oeuvre (L),
**caractérisé en ce qu'**à l'opération d'usinage par fraisage succède une opération d'usinage par tournage lors de laquelle un tranchant de coupe de tournage (30) prévu sur l'outil (18), grâce à un mouvement relatif régulé en position de la pièce d'oeuvre (L) et de l'outil (18) dans au moins l'une des deux directions d'axe (X, Y) et à un mouvement de pivotement régulé en angle de rotation de l'outil (18) autour de l'axe de rotation d'outil (C), est appliqué tangentiellement à la surface à usiner (F), et est mené et guidé, en prise d'usinage par tournage, par-dessus la pièce d'oeuvre (L) le long d'un parcours en forme de spirale.

2. Procédé selon la revendication 1, **caractérisé en ce que** lors de l'opération d'usinage par tournage, au moins une zone partielle d'un tranchant de coupe de tournage (30) de l'outil (18) est amenée en prise d'usinage par tournage avec la surface à usiner (F) de la pièce d'oeuvre (L), au moins la zone partielle du tranchant de coupe de tournage (30) amenée en prise d'usinage par tournage étant d'une courbure égale ou seulement très légèrement inférieure à celle de la surface à usiner (F).

3. Procédé selon la revendication 1 ou 2, **caractérisé en ce que** lors de l'opération d'usinage par tournage, au moins une zone partielle d'un tranchant de coupe de tournage (30) de l'outil (18) est amenée en prise d'usinage par tournage avec la surface à usiner (F) de la pièce d'oeuvre (L), l'outil (18) étant, pour d'autres opérations d'usinage par tournage, en fonction de l'usure du tranchant de coupe de tournage (30), pivoté de manière régulée en angle de rotation autour de l'axe de rotation d'outil (C), en vue d'amener une autre zone partielle de ce tranchant de coupe de tournage (30) ou au moins une zone partielle d'un autre tranchant de coupe de tournage (30) en prise d'usinage par tournage avec la surface à usiner (F) de la pièce d'oeuvre (L).

4. Procédé selon l'une des revendications précédentes, **caractérisé en ce que** pour l'opération d'usinage par tournage, on met en oeuvre sur l'outil (18), un tranchant de coupe de tournage (30) qui présente des zones partielles (74, 76 ; 78, 80, 82, 84) de courbure différente, l'outil (18) étant, en fonction du volume d'enlèvement de copeaux souhaité et de la qualité d'état de surface souhaitée de la surface (F) usinée de la pièce d'oeuvre (L), pivoté de manière régulée en angle de rotation autour de l'axe de rotation d'outil (C) de façon telle, que pour un volume d'enlèvement de copeaux comparativement plutôt grand, une zone partielle plus fortement courbée du tranchant de coupe de tournage (30) soit amenée en prise d'usinage par tournage avec la surface à usiner (F) de la pièce d'oeuvre (L), tandis que pour une qualité d'état de surface comparativement plutôt élevée, une zone partielle plus faiblement courbée du tranchant de coupe de tournage (30) soit amenée en prise d'usinage par tournage avec la surface à usiner (F) de la pièce d'oeuvre (L).

5. Procédé selon l'une des revendications précédentes, **caractérisé en ce que** lors de l'opération d'usinage par tournage, un tranchant de coupe de tournage (30) en prise d'usinage par tournage avec la surface à usiner (F) est mené et guidé en prise d'usinage par tournage, par-dessus la pièce d'oeuvre (L) le long d'un parcours en forme de spirale, qui présente une forme similaire à une spirale d'Archimède.

6. Procédé selon l'une des revendications précédentes, **caractérisé en ce qu'**au moins pendant l'opération d'usinage par tournage, un jet haute pression de fluide de refroidissement est dirigé sur la zone de prise d'usinage entre l'outil (18) et la pièce d'oeuvre (L).

7. Outil (18) pour l'usinage de surface de pièces d'oeuvre (L) en matériaux ne présentant pas une dureté fragile, dans le domaine de la fabrication d'éléments optiques tels que des lentilles ou verres de lunettes en matériau synthétique, notamment pour la mise en oeuvre du procédé selon l'une des revendications précédentes, comprenant un corps de base (24) sur lequel sont prévus une pluralité de tranchants de coupe de fraisage (28), qui, lors d'une rotation de l'outil (18) autour d'un axe de rotation d'outil (C), définissent un cercle de révolution (20) dans un plan perpendiculaire à l'axe de rotation d'outil (C), outil dans lequel sur le corps de base (24) est prévu également au moins un tranchant de coupe de tournage (30), qui est agencé de manière à être décalé radialement vers l'intérieur par rapport au cercle de révolution (20) des tranchants de coupe de fraisage (28), et dans lequel le tranchant de coupe de tournage (30) a une courbure constante avec un rayon qui correspond sensiblement à la distance du tranchant de coupe de tournage (30) à l'axe de rotation d'outil (C), ou bien présente des zones partielles (74, 76 ; 78, 80, 82, 84) de courbure différente respectivement constante, dont une zone partielle (76 ; 78) a une courbure constante avec un rayon qui correspond sensiblement à la distance du tranchant de coupe de tournage (30) à l'axe de rotation d'outil (C).

8. Outil (18) selon la revendication 7, dans lequel sur le corps de base (24) sont prévus plusieurs tranchants de coupe de tournage (30), qui de préférence sont répartis de manière régulière à la périphérie du corps de base (24).

9. Outil (18) selon la revendication 7 ou 8, dans lequel le tranchant de coupe de tournage (30) présente des zones partielles (74, 76 ; 78, 80, 82, 84) de courbure différente respectivement constante, qui, vue dans la direction de rotation de l'outil (18), diminue continuellement de zone partielle à zone partielle, à partir d'une extrémité du tranchant de coupe de tournage (30) à l'autre extrémité du tranchant de coupe de tournage (30).

10. Outil (18) selon la revendication 7 ou 8, dans lequel le tranchant de coupe de tournage (30) comprend deux zones partielles (74, 76) dont une zone partielle (76) présente une courbure constante avec un rayon qui correspond sensiblement à la distance du tranchant de coupe de tournage (30) à l'axe de rotation d'outil (C), tandis que l'autre zone partielle (74) présente une courbure constante avec un rayon qui est nettement plus petit que le rayon de la zone partielle (76) citée en premier lieu.

11. Outil (18) selon l'une des revendications 7 à 10, dans lequel le tranchant de coupe de tournage (30) est formé par une plaquette de coupe (32) sur un outil de tournage (34) qui est fixé de manière amovible sur le corps de base (24).

12. Outil (18) selon la revendication 11, dans lequel le corps de base (24) est pourvu d'un trou borgne (62) destiné à recevoir un corps (64) à section de forme circulaire de l'outil de tournage (34), et le corps (64) présente un évidement oblique (66) sur lequel s'appuie une vis (68) pouvant être vissée dans un trou taraudé (70) du corps de base (24), en vue de fixer l'outil de tournage (34) de manière amovible sur le corps de base (24), et de le maintenir en butée contre le fond (72) du trou borgne (62).

13. Dispositif pour l'usinage de surface de pièces d'oeuvre (L) en matériaux ne présentant pas une dureté fragile, dans le domaine de la fabrication d'éléments optiques tels que des lentilles ou verres de lunettes en matériau synthétique, notamment pour la mise en oeuvre du procédé selon l'une des revendications 1 à 6 en utilisant un outil (18) notamment selon l'une des revendications 7 à 12, comprenant une broche porte-pièce d'oeuvre (10) au moyen de laquelle la pièce d'oeuvre (L) peut être entraînée en rotation de manière régulée en angle de rotation autour d'un axe de rotation de pièce d'oeuvre (B), et une broche porte-outil (12) au moyen de laquelle l'outil (18) peut être entraîné de manière rotative autour d'un axe de rotation d'outil (C) qui forme un angle (α) prédéterminé avec l'axe de rotation de pièce d'oeuvre (B), la broche porte-pièce d'oeuvre (10) et la broche porte-outil (12) pouvant être déplacées relativement l'une par rapport à l'autre de manière régulée en position dans deux directions d'axe (X, Y) perpendiculaires l'une à l'autre,
**caractérisé en ce que** pour un usinage de tournage de la surface à usiner (F) de la pièce d'oeuvre (L), l'outil (18) peut pivoter de manière régulée en angle de rotation autour de l'axe de rotation d'outil (C) au moyen de la broche porte-outil (12), de sorte qu'un tranchant de coupe de tournage (30) prévu sur l'outil (18) peut, en fonction de la position angulaire de rotation de la pièce d'oeuvre (L), être amené en une prise définie d'usinage par tournage avec la surface à usiner (F) de la pièce d'oeuvre (L).

14. Dispositif selon la revendication 13, **caractérisé en ce qu'**aussi bien la broche porte-pièce d'oeuvre (10) que la broche porte-outil (12) sont d'une orientation horizontale.
